# EUROPÄISCHE PATENTSCHRIFT

(11) **EP 2 730 912 B1**
(45) Veröffentlichungstag und Bekanntmachung des Hinweises auf die Patenterteilung: **15.05.2019**
(21) Anmeldenummer: 13450047.9
(22) Anmeldetag: 13.11.2013
(51) Int. Cl.: G01N 1/22

(54) **Vorrichtung zum Sammeln von Aerosolpartikeln aus der Luft**
Device for gathering aerosol particles from the air
Dispositif de collecte des particules d'aérosol contenues dans l'air

(30) Priorität: 13.11.2012 AT 12052012
(43) Veröffentlichungstag der Anmeldung: 14.05.2014
(73) Patentinhaber: IGUT GmbH, 3430 Tulln an der Donau (AT)
(72) Erfinder: Bruck, Stephan, A-1080 Wien (AT); Schlatte, Thomas, A-1190 Wien (AT)
(74) Vertreter: Keschmann, Marc

(56) Entgegenhaltungen:
- WO-A1-2007/016800
- DE-T2- 69 303 706
- US-A1- 2008 184 515

## Beschreibung

Die Erfindung betrifft eine Vorrichtung zum Sammeln von Aerosolpartikeln aus der Luft unter Verwendung einer Luftansaugvorrichtung, umfassend ein Filter und einen Träger für das Filter. Weiters betrifft die Erfindung ein Verfahren zum Sammeln von Aerosolpartikeln aus der Luft unter Verwendung einer Luftansaugvorrichtung.

Die Luft in Innenräumen enthält eine Vielzahl unterschiedlicher biologischer Aerosolpartikel, wie z.B. vollständige Blütenpollen, Algen, Pilzsporen, Bakterien und Viren oder Teile von Mikroben, Pflanzen oder Tieren (v.a. Ausscheidungsprodukte und Haut- und Fellbestandteile) Diese Art von Aerosolpartikeln umfasst ein sehr weites Größenspektrum. Während manche Pollen so groß sind, dass sie schon mit dem bloßen Auge sichtbar sind, gibt es auch Viren, deren Größe im Nanometer Bereich liegt. Aerosolpartikel können die Haut- und Atemwege bei zu hohen Konzentrationen oder toxischen Bestandteilen gesundheitlich negativ beeinflussen und z.B. toxisch, kanzerogen oder allergen wirken und die Lebensqualität der Menschen erheblich beinträchtigen. Bioaerosole unterliegen starken räumlichen und zeitlichen Konzentrationsschwankungen, sodass eine analytische Erfassung hohe Anforderungen an die Messanordnung stellt.

Die Luft in Innenräumen enthält aber auch eine Reihe von nicht-biogenen Partikeln (z.B. Asbestfasern, andere Fasern, anorganischer Staub, etc.).

Für die Erfassung von Aerosolpartikeln sind in der Regel drei Schritte erforderlich: die Abscheidung der Partikel aus der Luft, die Isolierung und Identifizierung der relevanten Inhaltsstoffe und die Quantifizierung derselben. Es sind verschiedene Verfahren und Vorrichtungen bekannt geworden, mit denen Aerosolpartikel aus der Luft gesammelt werden können. Herkömmliche Vorrichtungen arbeiten z.B. nach dem Impaktionsverfahren, Impingementverfahren oder nach dem Filterverfahren. Um die Partikelkonzentration in der Luft mit hinreichender Genauigkeit bestimmen zu können, müssen die Analyseergebnisse in Bezug zu dem beim Aufsammeln erfassten Luftvolumen gesetzt werden. Herkömmliche Aerosolsammelvorrichtungen zielen daher darauf ab, ein genau definiertes Luftvolumen zu erfassen und die Aerosolpartikel dieses genau definierten Luftvolumens abzuscheiden, wozu ein hoher regelungstechnischer Aufwand erforderlich ist. Die herkömmlichen Sammelvorrichtungen sind daher kompliziert im Aufbau und in der Bedienung sowie teuer.

Die vorliegende Erfindung zielt daher darauf ab, die Aerosolsammlung von Partikeln biogenen und nicht-biogenen Ursprungs technisch weniger aufwändig zu gestalten, um eine Anwendung auch durch unerfahrene Benutzer zu gestatten.

Zur Lösung dieser Aufgabe sieht die Erfindung bei einer Vorrichtung der eingangs genannten Art vor, dass der Träger von einem Aufsatz für Haus- oder Industriestaubsauger gebildet ist, der ein Gehäuse mit einem Lufteinlass und einem Luftauslass umfasst, wobei lufteinlassseitig eine Haltevorrichtung für das Filter und luftauslassseitig ein sich zur Auslassseite hin konisch erweiternder rohrförmigen Steckaufsatz für ein Saugrohr des Haus- oder Industriestaubsaugers vorgesehen sind, sodass das Filter von der angesaugten Luft durchströmbar ist. Die Erfindung schafft somit eine Aerosolsammelvorrichtung für den Hausgebrauch, die einfach handzuhaben und kostengünstig bereitzustellen ist. Mit Hilfe des Staubsaugeraufsatzes können Aerosolpartikel direkt und aktiv (im Gegensatz zur passiven Sammlung durch das Sedimentationsverfahren) aus der Luft aufgesammelt werden.

Der integrierte, sich zur Auslassseite hin konisch erweiternde rohrförmige Steckaufsatz gewährleistet, dass die erfindungsgemäße Vorrichtung auf Saugrohre nahezu beliebigen Durchmessers aufgesteckt werden kann, sodass die Anwender den jeweils zur Verfügung stehenden Staubsauger verwenden können. Teure Zusatzgeräte sind somit entbehrlich. Bevorzugt besteht der Steckaufsatz aus flexiblem Kunststoff, sodass der Steckaufsatz zumindest geringfügig elastisch aufweitbar ist. Dies gewährleistet eine ausreichend Klemmkraft beim Aufstecken des Steckaufsatzes auf das Saugrohr.

Da das Filter dem Luftstrom einen deutlichen Widerstand entgegensetzt, muss dafür Sorge getragen werden, dass der Staubsauger nicht überhitzt, was zu einer automatischen Abschaltung des Geräts und damit zu einem unerwünschten Abbruch der Aerosolaufsammlung führen kann. Aufgrund dessen ist die wirksame Fläche des Filters erfindungsgemäß größer als der Strömungsquerschnitt des Steckaufsatzes. Dies gewährleistet außerdem eine Vergrößerung des Volumenstroms, sodass die Zeit der Erfassung des für die Probennahme erforderlichen Luftvolumens verringert werden kann. Das Filter ist erfindungsgemäß scheibenförmig ausgebildet, wobei die im Vergleich zum Strömungsquerschnitt des Steckaufsatzes vergrößerte Filterfläche eine Anpassung an Standardmaße herkömmlicher Filter erlaubt. Bevorzugt weist das Filter einen Durchmesser von 45-50mm, insbesondere 47mm auf.

Weiters ist erfindungsgemäß vorgesehen, dass das Filter einen kreisförmigen oder eckigen Umriss aufweist.

In konstruktiv besonders einfacher Weise ist hierbei bevorzugt vorgesehen, dass der Steckaufsatz unter Ausbildung eines mit geschlossenem Boden ausgebildeten Ringraumes in dem insbesondere rohrförmigen Gehäuse angeordnet ist. Bevorzugt mündet der Steckaufsatz dabei in axialem Abstand vom Filter im Gehäuse, damit das Filter über die gesamte Fläche von der angesaugten Luft durchströmt werden kann.

Damit alle interessierenden Bioaerosoltypen gesammelt werden können, d.h. insbesondere Viren, Bakterien, Pilze, Pollen, Algen und/oder Hausstaubmilben bzw. Fragmente davon, beträgt die Porengröße des Filters 0,1-10 µm, bevorzugt 0,1-5µm, bevorzugt 0,1-1µm, bevorzugt 0,1-0,5µm wobei bei Tiefenfiltern der Abscheidegrad bis in den 1nm Bereich gehen kann. Grundsätzlich kann das Filter als Oberflächenfilter oder als Tiefenfilter ausgebildet sein.

Das Filter ist bevorzugt so gewählt, dass es auch bei geringem Unterdruck eine große Luftdurchflussrate erlaubt und eine große Rückhalterate auch für kleine Partikel wie z.B. Bakterien und Pilzsporen zu erwarten ist. Außerdem soll eine gewisse mechanische Stabilität gewährleistet werden. Das Filter besteht bevorzugt aus einem Glasfaservlies.

Bevorzugt ist das Filter so ausgewählt, dass der Volumenfluss unabhängig bzw. nur geringfügig abhängig von der Leistung des Staubsaugers ist, damit bei gleichbleibender Probenahmedauer gleiche Luftvolumina gesammelt werden. Dies bedeutet, dass der Volumenstrom hauptsächlich eine Kenngröße des Filters sein soll, die relativ unabhängig vom verwendeten Staubsauger ist. Dies ist insbesondere bei Filtern der Fall, die eine Aerosolrückhalterate von < 97% aufweisen.

Um eine ausreichende Fixierung des Filters zu gewährleisten, umfasst die Haltevorrichtung bevorzugt ein Gitter zum Auflegen des Filters. Weiters ist bevorzugt ein Gitter auf dem Filter positioniert, sodass das Filter zwischen zwei Gittern gehalten wird. Alternativ kann das Filter auf einer luftdurchlässigen Platte, insbesondere einer Lochplatte oder einem Gitter aufliegen und mit Halte- oder Klemmmitteln oder dgl. gegen die Platte oder das Gitter gedrückt bzw. gehalten werden. Alternativ kann das Filter in einem die Haltevorrichtung ausbildenden Rahmen fest eingebaut sein.

Bevorzugt ist die Haltevorrichtung abnehmbar am oder im Gehäuse angeordnet. Dies ermöglicht es, das Filter samt Haltevorrichtung in einfacher Weise nach der Probenahme zu entnehmen und zur Analysestelle zu transportieren. Danach kann für eine weitere Probenahme eine neue Haltevorrichtung samt Filter in die Sammelvorrichtung eingelegt werden, sodass insgesamt eine mehrfach verwendbare Sammelvorrichtung zur Verfügung steht. Die mit den Aerosolpartikeln belegten Filteroberflächen können mit einer Abdeckung versehen werden, um damit die Qualität der Probe zu erhalten und insbesondere ein Entweichen der Partikel während des Transportes und der Handhabung zu verhindern.

Bevorzugt ist die Abdeckung als Deckel ausgebildet, der mit dem Rand der Haltevorrichtung zusammenwirkt, insbesondere diesen umfangsmäßig umgreift. Der Deckel kann beispielsweise mittels Klemmung auf der Haltevorrichtung abnehmbar befestigt sein. Der Deckel kann vorzugsweise mit antistatischen Eigenschaften ausgeführt sein.

Gemäß einem weiteren Aspekt der Erfindung wird ein Verfahren zum Sammeln von Aerosolpartikeln aus der Luft unter Verwendung einer Luftansaugvorrichtung vorgeschlagen, das sich dadurch auszeichnet, dass eine Sammelvorrichtung auf das offene Ende eines Saugrohrs eines Haus- oder Industriestaubsaugers gesteckt wird, dass der Hausstaubsauger über eine definierte Saugdauer mit einer definierten Saugleistung in Betrieb genommen wird, wobei die Sammelvorrichtung in die Luft gehalten wird, dass das Filter nach Ablauf der definierten Saugdauer entnommen wird, vorzugsweise keimfrei verpackt und einer Partikelanalyse unterzogen wird. Nach dem Entnehmen des Filters wird die Filteroberfläche bevorzugt bedeckt.

Bevorzugt erfolgt die Probenahme über eine Dauer von einigen Minuten, (typischerweise 3 bis 7 Minuten), während der das Saugrohr mit der Sammelvorrichtung in die Luft gehalten wird.

Auf Grund der Verwendung eines Haus- oder Industriestaubsaugers kann es bei der Probenahme in Abhängigkeit vom Staubsaugertyp zu variierenden Durchflussraten durch das Filter kommen. Die Durchflussrate wird hierbei hauptsächlich durch die Bauart des Staubsaugers und die Saugleistung bestimmt. Für verlässliche Ergebnisse bei der Konzentrationsbestimmung der Aerosolpartikel ist es wichtig, dass die Analyse in Kenntnis des durch das Filter hindurchgesaugten Luftvolumens erfolgt. Dies kann beim erfindungsgemäßen Verfahren bevorzugt dadurch sichergestellt werden, dass eine Tabelle zur Verfügung gestellt wird, in der Werte der Saugleistung Werten der Saugdauer zugeordnet sind, und dass der Staubsauger über die der jeweils eingestellten Saugleistung zugeordnete Saugdauer in Betrieb genommen wird. Die Tabelle ist hierbei so gestaltet, dass die einander zugeordneten Werte jeweils ein vorbestimmtes Gesamtluftvolumen ergeben, z.B. 1m³. Der Anwender identifiziert in der Tabelle die Saugleistung seines Staubsaugers und führt die Probenahme dann über die in der Tabelle für diese Saugleistung angegebene Dauer durch.

Alternativ kann auch so vorgegangen werden, dass dem Anwender unabhängig von der jeweiligen Saugleistung eine definierte Saugdauer vorgegeben wird. Das Verfahren wird dann bevorzugt so durchgeführt, dass die Saugleistung oder der Staubsaugertyp und ggf. die Saugdauer händisch oder maschinell aufgezeichnet und der Partikelanalyse zur Verfügung gestellt wird, dass ggf. auf Grund des Staubsaugertyps die Saugleistung bestimmt wird, aus der Saugleistung das über die Saugdauer durch das Filter hindurchgesaugte Luftvolumen berechnet wird, und dass die bei der Partikelanalyse erhaltenen Werte entsprechend der Abweichung des berechneten Luftvolumens von einem Referenzwert korrigiert werden.

Um den Aufwand für den Anwender zu minimieren ist als weitere, bevorzugte Alternative vorgesehen, dass der Anwender lediglich den Typus des Staubsaugers identifiziert und die Saugdauer angibt und für die Auswertung zur Verfügung stellt. Bei der Auswertung durch Fachpersonal wird dann aus der Saugleistung des angegebenen Staubsaugers und der mitgeteilten Saugdauer die durchgesaugte Luftmenge errechnet und diese Luftmenge bei der Partikelanalyse entsprechend berücksichtigt.

Gemäß einer bevorzugten Ausführungsform der Erfindung umfasst die Partikelanalyse je nach Fragestellung eine mikrobiologische, molekularbiologische, chemische, biochemische oder physikalische Analyse der Partikel bzw. notwendige Kombinationen aus denselben.

Die Erfindung wird nachfolgend anhand eines in der Zeichnung schematisch dargestellten Ausführungsbeispiels der Sammelvorrichtung erläutert. In dieser zeigen Fig.1 eine Schnittansicht der Vorrichtung nach Linie I-I gemäß Fig. 2; Fig.2 eine Frontalansicht der erfindungsgemäßen Sammelvorrichtung; Fig.3 eine perspektivische Darstellung der Sammelvorrichtung und Fig. 4 eine Schnittansicht der Haltevorrichtung für das Filter samt Deckel.

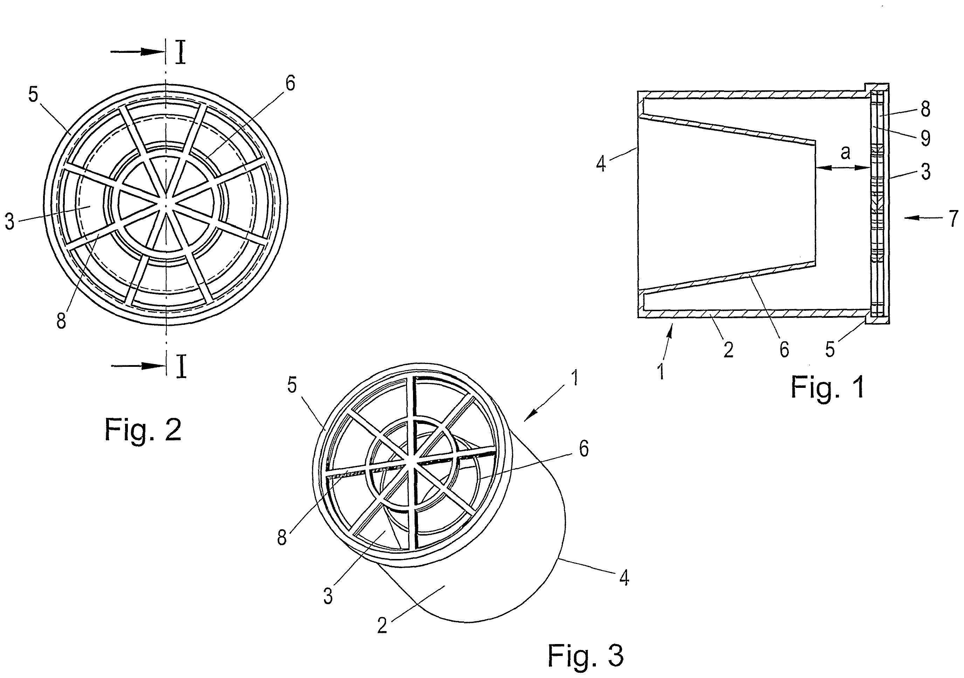

In der Schnittansicht gemäß Fig.1 ist ersichtlich, dass die Vorrichtung als Aufsatz 1 für handelsübliche Hausstaubsauger geformt ist. Der Aufsatz 1 umfasst ein rohrförmiges Gehäuse 2, das einstückig mit einem innerhalb des Gehäuses 2 ausgebildeten Steckaufsatz 6 ausgebildet ist. Der Steckaufsatz 6 weist einen sich von 26mm auf 39mm konisch erweiternden Durchmesser auf und wird somit von einem Kegelstumpf gebildet, der einen Öffnungswinkel von 18° besitzt. Dies gewährleistet, dass die Vorrichtung auf handelsübliche Staubsaugerrohre aufgesetzt werden kann. Das Gehäuse 2 weist einen Absatz 5 auf, der eine kreisringförmige Auflagefläche für eine Haltevorrichtung für einen Filter bildet. Die Haltevorrichtung wird dabei von zwei deckungsgleichen Gittern 8 und 9 gebildet, zwischen denen ein nicht dargestelltes Filter angeordnet werden kann.

Das Gehäuse 2 umfasst einen Lufteinlass 3 und einen Luftauslass 4, wobei sich die Haltevorrichtung für das Filter lufteinlassseitig befindet und luftauslassseitig der sich zur Auslassseite hin konisch erweiternde rohrförmigen Steckaufsatz 6 ausgebildet ist, sodass das Filter in Richtung des Pfeils 7 von der angesaugten Luft durchströmbar ist. Der Steckaufsatz 6 mündet in axialem Abstand a vom Filter im Gehäuse 2.

Fig.2 zeigt eine Frontalansicht der erfindungsgemäßen Vorrichtung, wobei der Lufteinlass 3 der Vorrichtung, die deckungsgleichen Gitter 8 und Gitter 9 (nicht dargestellt) zum Auflegen des ebenfalls nicht dargestellten Filters und der im Inneren der Vorrichtung befindliche rohrförmige Steckaufsatz 6 gezeigt sind.

Fig.3 zeigt eine perspektivische Darstellung der Sammelvorrichtung, wobei besonders der sich zur Auslassseite 4 hin konisch erweiternde rohrförmige Steckaufsatz 6 erkennbar ist.

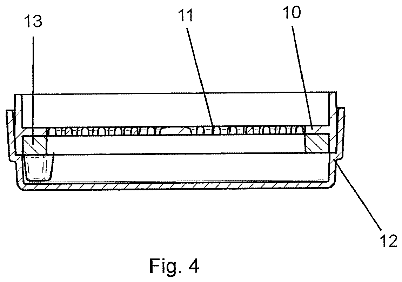

Fig. 4 zeigt eine abgewandelte Ausführung der Haltevorrichtung für das Filter. Die Haltevorrichtung 10 umfasst hierbei eine Lochplatte oder ein Gitter 11, auf welchem das scheibenförmige Filter (nicht dargestellt) aufliegt. Der Rand des Filters wird zwischen einem Klemmring 13 und einem nach innen ragenden Vorsprung der Haltevorrichtung 10 gehalten, wobei der Klemmring ansaugseitig angeordnet ist. Weiters ist ein Deckel 12 ersichtlich, der das Filter nach und/oder vor dem Gebrauch ansaugseitig abdeckt.

Insgesamt erlaubt es die Erfindung im Gegensatz zu herkömmlichen Hausstaubsaugeraufsatz-Systemen, die mit einem Sieb bzw. einem groben Filtereinsatz nur niedergeschlagenen Hausstaub erfassen können, das gesamte Spektrum an biogenen Aerosolen zu erfassen, da Filter verwendet werden können, die Partikel vom sub-micrometer Bereich bis hin zu Millimeter Größen abscheiden können. Diese Filter eignen sich für alle Arten der anschließenden Analysen der Aerosolpartikel biogenen aber auch nicht-biogenen Ursprungs wie z.B. mikrobiologische, molekularbiologische, chemische, biochemische und physikalische Analysen. Im speziellen eignen sich die Filter daher auch zur molekularbiologischen Analyse von mikrobiellen Bestandteilen des Aerosols, die bereits vor oder nach dem Sammelverfahren nicht mehr lebensfähig sind und daher in der klassischen mikrobiologischen Auswertung nicht aufscheinen würden, sehr wohl aber toxisches bzw. allergenes Potential aufweisen können (z.B. bakterielle Endotoxine, Mycotoxine, biogene allergene Epitope verschiedenster Organismen).

## Patentansprüche

1. Vorrichtung zum Sammeln von Aerosolpartikeln aus der Luft unter Verwendung einer Luftansaugvorrichtung, umfassend ein Filter und einen Träger für das Filter, wobei der Träger von einem Aufsatz (1) für Haus- und Industriestaubsauger gebildet ist, der ein Gehäuse (2) mit einem Lufteinlass (3) und einem Luftauslass (4) umfasst, wobei lufteinlassseitig eine Haltevorrichtung für das Filter und luftauslassseitig ein sich zur Auslassseite hin konisch erweiternder rohrförmiger Steckaufsatz (6) für ein Saugrohr des Hausstaubsaugers vorhanden sind, sodass das Filter von der angesaugten Luft durchströmbar ist, **dadurch gekennzeichnet, dass** das Filter scheibenförmig ausgebildet ist und einen kreisförmigen oder eckigen Umriss aufweist und die wirksame Fläche des Filters größer ist als der Strömungsquerschnitt des Steckaufsatzes (6).

2. Vorrichtung nach Anspruch 1, **dadurch gekennzeichnet, dass** der Steckaufsatz (6) unter Ausbildung eines mit geschlossenem Boden ausgebildeten Ringraumes in dem insbesondere rohrförmigen Gehäuse (2) angeordnet ist.

3. Vorrichtung nach Anspruch 1 oder 2, **dadurch gekennzeichnet, dass** der Steckaufsatz (6) aus flexiblem Kunststoff besteht.

4. Vorrichtung nach einem der Ansprüche 1, 2 oder 3, **dadurch gekennzeichnet, dass** der Steckaufsatz (6) in axialem Abstand (a) vom Filter im Gehäuse mündet.

5. Vorrichtung nach einem der Ansprüche 1 bis 4, **dadurch gekennzeichnet, dass** die Haltevorrichtung ein Gitter (8,9) zum Auflegen des Filters umfasst.

6. Vorrichtung nach einem der Ansprüche 1 bis 5, **dadurch gekennzeichnet, dass** die Haltevorrichtung abnehmbar am oder im Gehäuse (2) angeordnet ist und vorzugsweise die Anbringung einer Abdeckung des Filters erlaubt, die ein Entweichen der gesammelten Aerosolbestandteile während der Handhabung oder Transportes minimiert.

7. Vorrichtung nach einem der Ansprüche 1 bis 6, **dadurch gekennzeichnet, dass** das Filter als Oberflächen- oder Tiefenfilter ausgebildet ist.

8. Vorrichtung nach einem der Ansprüche 1 bis 7, **dadurch gekennzeichnet, dass** die Porengröße des Oberflächenfilters 0,1-10 µm beträgt.

9. Vorrichtung zum Sammeln von Aerosolpartikeln aus der Luft umfassend einen Haus- oder Industriestaubsauger mit einem Saugrohr und eine Vorrichtung nach einem der Ansprüche 1 bis 8, die mit ihrem konischen Steckaufsatz (6) auf das offene Ende des Saugrohrs aufgesteckt ist.

10. Verfahren zum Sammeln von Aerosolpartikeln aus der Luft unter Verwendung einer Luftansaugvorrichtung, **dadurch gekennzeichnet, dass** eine Sammelvorrichtung nach einem der Ansprüche 1 bis 9 auf das offene Ende eines Saugrohrs der Luftansaugvorrichtung, nämlich eines Haus- oder Industriestaubsaugers, gesteckt wird, dass der Staubsauger über eine definierte Saugdauer mit einer definierten Saugleistung in Betrieb genommen wird, wobei die Sammelvorrichtung in die Luft gehalten wird, dass das Filter nach Ablauf der definierten Saugdauer entnommen wird, vorzugsweise keimfrei verpackt wird und einer Partikelanalyse unterzogen wird.

11. Verfahren nach Anspruch 10, **dadurch gekennzeichnet, dass** eine Tabelle zur Verfügung gestellt wird, in der Werte der Saugleistung Werten der Saugdauer zugeordnet sind, und dass der Staubsauger über die der jeweils eingestellten Saugleistung zugeordnete Saugdauer in Betrieb genommen wird.

12. Verfahren nach Anspruch 10 oder 11, **dadurch gekennzeichnet, dass** die Saugleistung oder der Staubsaugertyp und ggf. die Saugdauer händisch oder maschinell aufgezeichnet und der Partikelanalyse zur Verfügung gestellt wird, dass ggf. auf Grund des Staubsaugertyps die Saugleistung bestimmt wird, aus der Saugleistung das über die Saugdauer durch das Filter hindurchgesaugte Luftvolumen berechnet wird, und dass die bei der Partikelanalyse erhaltenen Werte entsprechend der Abweichung des berechneten Luftvolumens von einem Referenzwert korrigiert werden.

13. Verfahren nach Anspruch 10, 11 oder 12, **dadurch gekennzeichnet, dass** die Partikelanalyse eine mikrobiologische, molekularbiologische, chemische, biochemische und/oder physikalische Analyse oder beliebigen Kombinationen davon der Partikel umfasst.

14. Verfahren nach einem der Ansprüche 11 bis 13, **dadurch gekennzeichnet, dass** Viren, Bakterien, Pilze, Pflanzen, Algen, Tiere bzw. Teile von Tieren, wie z.B. kleine Fragmente und Ausscheidungen, und/oder Aerosolpartikel nicht-biogenen (geogenen) Ursprungs gesammelt werden.

## Claims

1. A device for collecting aerosol particles from the air using an air suction device, comprising a filter and a support for the filter, wherein the support is formed by an attachment piece (1) for domestic and industrial vacuum cleaner comprising a housing (2) with an air inlet (3) and an air outlet (4), wherein a holding device for the filter is provided on the air inlet side and a tubular plug attachment (6) for a suction pipe of the house vacuum cleaner that conically widens toward the outlet side is provided on the air outlet side, so that the filter can be flowed through by the sucked air, **characterized in that** the filter is disc-shaped and has a circular or angular outline, and that the effective area of the filter is greater than the flow cross-section of the plug attachment (6) .

2. Device according to claim 1, **characterized in that** the plug attachment (6) is arranged to form a closed-bottomed annular space in the particularly tubular housing (2).

3. Device according to claim 1 or 2, **characterized in that** the plug attachment (6) consists of flexible plastic.

4. Device according to claim 1, 2 or 3, **characterized in that** the plug attachment (6) opens at an axial distance (a) from the filter in the housing.

5. Device according to any one of claims 1 to 4, **characterized in that** the holding device comprises a grid (8,9) for placing the filter.

6. Device according to any one of claims 1 to 5, **characterized in that** the holding device is removably mounted on or in the housing (2) and preferably allows the attachment of a cover of the filter, which minimizes leakage of the collected aerosol components during handling or transport.

7. Device according to any one of claims 1 to 6, **characterized in that** the filter is designed as a surface or depth filter.

8. Device according to any one of claims 1 to 7, **characterized in that** the pore size of the surface filter is 0.1-10 µm.

9. Device for collecting aerosol particles from the air comprising a domestic or industrial vacuum cleaner with a suction tube and a device according to any one of claims 1 to 8, which is fitted with its conical plug attachment (6) on the open end of the suction tube.

10. A method for collecting aerosol particles from the air using an air suction device, **characterized in that** a collecting device according to any one of claims 1 to 9 is placed on the open end of a suction pipe of the suction device, namely a domestic or industrial vacuum cleaner, that the vacuum cleaner is operated over a defined suction duration with a defined suction power, wherein the collecting device is held in the air, that the filter is removed after the defined suction time has expired, is preferably packaged germ-free and subjected to a particle analysis.

11. A method according to claim 10, **characterized in that** a table is provided in which values of the suction power are assigned to values of the suction duration, and that the vacuum cleaner is put into operation over the suction duration associated with the respective set suction power.

12. A method according to claim 10 or 11, **characterized in that** the suction power or the vacuum cleaner type and optionally the suction time is recorded manually or automatically and is made available to the particle analysis, that the suction power is determined optionally by the vacuum cleaner type, the air volume sucked through the filter during the suction time is calculated from the suction power, and that the values obtained during the particle analysis are corrected in accordance with the deviation of the calculated air volume from a reference value.

13. A method according to claim 10, 11 or 12, **characterized in that** the particle analysis comprises a microbiological, molecular biological, chemical, biochemical and/or physical analysis of the particles or any combination thereof.

14. A method according to any one of claims 11 to 13, **characterized in that** viruses, bacteria, fungi, plants, algae, animals or parts of animals, such as small fragments and excretions, and/or aerosol particles of non-biogenic (geogenic) origin can be collected.

## Revendications

1. Dispositif destiné à collecter des particules d'aérosol à partir de l'air en utilisant un dispositif aspirateur d'air, comprenant un filtre et un support pour le filtre, dans lequel le support est formé par un chapeau (1) pour aspirateur domestique et industriel, qui comprend un corps (2) avec une entrée d'air (3) et avec une sortie d'air (4), dans lequel un dispositif de retenue destiné au filtre est prévu côté entrée d'air et un chapeau insérable (6) en forme de tube, élargi en cône en direction du côté de la sortie et destiné à un tuyau aspirateur de l'aspirateur domestique est prévu côté sortie d'air de telle sorte que le filtre peut être traversé par l'air aspiré, **caractérisé en ce que** le filtre est réalisé en forme de plaque et présente un contour circulaire ou polygonal et la surface efficace du filtre est plus grande que la section transversale d'écoulement du chapeau insérable (6).

2. Dispositif selon la revendication 1, **caractérisé en ce que** le chapeau insérable (6) est agencé dans le corps (2) en particulier tubulaire en formant un espace annulaire réalisé avec un fond fermé.

3. Dispositif selon la revendication 1 ou 2, **caractérisé en ce que** le chapeau insérable (6) est en un plastique flexible.

4. Dispositif selon l'une quelconque des revendications 1, 2 ou 3, **caractérisé en ce que** le chapeau insérable (6) débouche dans le corps à une certaine distance axiale (a) du filtre.

5. Dispositif selon l'une quelconque des revendications 1 à 4, **caractérisé en ce que** le dispositif de retenue comprend une grille (8, 9) destinée à l'appui du filtre.

6. Dispositif selon l'une quelconque des revendications 1 à 5, **caractérisé en ce que** le dispositif de retenue est agencé amovible sur ou dans le corps (2) et permet de préférence la mise en place d'un couvercle du filtre, lequel couvercle minimise une fuite des constituants d'aérosol collectés pendant la manipulation ou le transport.

7. Dispositif selon l'une quelconque des revendications 1 à 6, **caractérisé en ce que** le filtre est réalisé comme un filtre en surface ou un filtre en profondeur.

8. Dispositif selon l'une quelconque des revendications 1 à 7, **caractérisé en ce que** la dimension des pores du filtre en surface est comprise entre 0,1-10 µm.

9. Dispositif destiné à collecter des particules d'aérosol à partir de l'air, comprenant un aspirateur domestique ou industriel avec un tuyau aspirateur et un dispositif selon l'une quelconque des revendications 1 à 8 qui est inséré avec son chapeau insérable (6) conique sur l'extrémité ouverte du tuyau aspirateur.

10. Procédé destiné à collecter des particules d'aérosol à partir de l'air en utilisant un dispositif aspirateur d'air, **caractérisé en ce qu'**un dispositif de collecte selon l'une quelconque des revendications 1 à 9 est inséré sur l'extrémité ouverte d'un tuyau aspirateur du dispositif aspirateur d'air, à savoir d'un aspirateur domestique ou industriel, **en ce que** l'aspirateur est mis en service pendant une durée d'aspiration définie avec une puissance d'aspiration définie, le dispositif de collecte étant tenu dans l'air, **en ce que** le filtre est enlevé à la fin de la durée d'aspiration définie, est emballé de préférence de manière stérile et est soumis à une analyse de particules.

11. Procédé selon la revendication 10, **caractérisé en ce qu'**un tableau dans lequel des valeurs de la puissance d'aspiration sont associées à la durée d'aspiration est fourni et **en ce que** l'aspirateur est mis en service pendant la durée d'aspiration associée à la puissance d'aspiration respectivement réglée.

12. Procédé selon la revendication 10 ou 11, **caractérisé en ce que** la puissance d'aspiration ou le type d'aspirateur et éventuellement la durée d'aspiration sont enregistrés à la main ou à la machine et sont mis à la disposition de l'analyse de particules, **en ce que** la puissance d'aspiration est déterminée le cas échéant sur la base du type d'aspirateur et le volume d'air aspiré à travers le filtre pendant la durée d'aspiration est calculé à partir de la puissance d'aspiration et **en ce que** les valeurs obtenues lors de l'analyse de particules sont corrigées en fonction de l'écart entre le volume d'air calculé et une valeur de référence.

13. Procédé selon la revendication 10, 11 ou 12, **caractérisé en ce que** l'analyse de particules comprend une analyse microbiologique, de biologie moléculaire, chimique, biochimique et/ou physique ou des combinaisons quelconques de ces analyses portant sur les particules.

14. Procédé selon l'une quelconque des revendications 11 à 13, **caractérisé en ce que** des virus, bactéries, champignons, plantes, algues, animaux ou parties d'animaux, par exemple de petits fragments et dépôts, et/ou des particules d'aérosol d'origine non biogène (géogène) sont collectés.
